# EUROPEAN PATENT APPLICATION

(11) **EP 3 259 973 A1**
(43) Date of publication of application: **27.12.2017**
(21) Application number: 16305745.8
(22) Date of filing: 20.06.2016
(51) Int. Cl.: A01D 34/416

(54) **CUTTING WIRE FOR A VEGETATION CUTTING MACHINE, AND COIL FORMED FROM SUCH A CUTTING WIRE**

(71) Applicant: Speed France S.A.S., 69400 Arnas (FR)
(72) Inventor: LEGRAND, Emmanuel, 01240 St Germain sur Renon (FR)
(74) Representative: Regimbeau

(57) **Abstract**

The invention relates to a cutting wire (20) for a vegetation cutting machine, comprising a main body (201) and at least one lip (200) extending from said main body.

The invention also relates to a coil (2) of cutting wire for a vegetation cutting machine, comprising at least one cutting wire would on itself so as to form at least two adjacent turns (21, 22), wherein said at least two adjacent turns are temporarily bonded by a film extending on at least one main surface of the coil and made of the same material as the cutting wire.

The invention further relates to a process for producing a coil of cutting wire, comprising:
- providing a cutting wire or a ribbon comprising at least two cutting wires;
- winding each cutting wire on itself so as to form a coil;
- fusing the at least one lip (200) of the cutting wire so as to form a film temporarily bonding adjacent turns of the coil.

## Description

### FIELD OF THE INVENTION

The invention relates to a cutting wire for a vegetation cutting machine, a coil formed from such a cutting wire, a cutting assembly comprising a cutting head and such a coil, and a process of manufacturing such a coil.

### BACKGROUND OF THE INVENTION

Self-supporting coils of cutting wire for vegetation cutting machines are of great interest since they render the insertion and/or replacement of the wire in a cutting head very easy.

In the present text, "self-supporting" means that the wire is capable of remaining coiled on itself, without any holding means external thereto. It is therefore not necessary to lock the turns of the coil by a binding surrounding its turns so as to hold them adjacent, nor by packaging adjusted to the dimensions and format of the coil.

The locking of the turns is temporary, i.e. intended to be effective during storage and shipment of the coil, until its insertion into the cutting head; however, the turns are separable under the effect of a pulling force exerted on the free end of the wire.

Document US 4,024,635 discloses such a self-supporting coil wherein adjacent turns of a round cutting wire are held together either by ultrasonic welding, an adhesive or a film backing.

Document FR 2 967 548 discloses another self-supporting coil, which is made of a wire having reciprocal retention provisions such that, when the wire is wound upon itself, each turn cooperates with at least one adjoining turn so as to retain it mechanically.

This wire therefore makes it possible in particular to make a self-supporting coil having a flat shape with a central void.

Such a self-supporting coil can be advantageously used in combination with a cutting head as described in document WO 2014/020178. Said cutting head includes:
- a body defining an inner recess for the coil and provided with a peripheral opening for extending a length of cutting wire separated from the coil, and capable of being driven in rotation by a motor, and
- a central mandrel adapted to support said at least one coil, said mandrel comprising at least one arrangement adapted to cooperate with the coil so as to ensure rotational engagement between the mandrel and the coil, the mandrel being able to turn selectively relative to the body.

When a user wants to insert the self-supporting coil in the cutting head, he merely has to open the cutting head, arrange the central void of the coil around the mandrel, reel off a given length of the wire to extend from the peripheral opening, and close the cutting head.

However, the applicant has found that, irrespective of whether the turns are bonded by reciprocal arrangements as in document FR 2 967 548 or by adhesion as in document US 4,024,635, with such a low bonding strength, the turns may slide along each other under the effect of the centrifugal force, in such a way that the coil tightens up around the mandrel.

### BRIEF DESCRIPTION OF THE INVENTION

A goal of the invention is to remedy to the above-mentioned drawbacks of the existing devices and to improve the bonding strength that holds the turns of the cutting wire together while allowing separating the turns when necessary in view of reeling off a given length of the cutting wire. Another goal of the invention is to provide a process for manufacturing a coil of cutting wire that is simple and cost-effective to implement at the industrial scale.

An object of the invention is a cutting wire for a vegetation cutting machine, comprising a main body and at least one lip extending from said main body.

According to an embodiment, the main body has a non-circular shape.

According to an embodiment, the main body comprises first and second opposite sides having complementary shapes such that when the cutting wire is wound on itself, the first side engages the second side to join adjacent turns.

The cutting wire may be made of a material comprising a polyamide and/or a copolyamide.

The cross section of the main body may have an area equal to the cross-section of a round wire having a diameter comprised between 1.35 and 4 mm.

Preferably, the area of the cross section of the lip ranges from 0.1 to 5% of the area of the cross section of the cutting wire.

Another object of the invention is a ribbon comprising at least two cutting wires as described above, bonded longitudinally in a separable manner.

According to an embodiment, the at least two cutting wires are joined to each other by at least one tearable section thinner than the main body.

Another object of the invention is a coil of cutting wire for a vegetation cutting machine, comprising at least one cutting wire would on itself so as to form at least two adjacent turns, wherein said at least two adjacent turns are temporarily bonded by a film extending on at least one main surface of the coil and made of the same material as the cutting wire.

Said coil comprises a cutting wire as described above or a ribbon as described above, wherein each wire is wound on itself so as to form at least two adjacent turns and the lip is fused to form the film that temporarily bonds said adjacent turns.

Preferably, the coil has a flat shape.

According to an embodiment, before being fused, the at least one lip extends in a direction different from a main surface of the coil.

Another object of the invention is a process for producing a coil of cutting wire as described above, comprising:
- providing a cutting wire or a ribbon as described above;
- winding each cutting wire on itself so as to form a coil;
- fusing the at least one lip of the cutting wire so as to form a film temporarily bonding adjacent turns of the coil.

Advantageously, the provision of the cutting wire comprises extruding the cutting wire though a die presenting a cross section defining the main body and the at least one lip.

Preferably, the winding step is carried out so as to form a flat coil.

According to an embodiment, the at least one lip extends in a direction different from a main surface of the coil.

According to an embodiment, the cutting wire comprises at least two lips extending on both sides of the coil.

The fusion step may be carried out by ultrasonic welding, friction welding, hot plate welding, and/or high frequency welding.

Another object of the invention is a cutting assembly for a vegetation cutting machine such as a border trimmer or a brush cutter, said assembly including at least one coil as described above and a cutting head comprising:
- a body defining an inner recess for the coil and provided with a peripheral opening for the emergence of a length of cutting wire separated from the coil, and capable of being driven in rotation by a motor, and
- a central mandrel for supporting said at least one coil, said mandrel comprising at least one arrangement adapted to cooperate with the coil so as to ensure rotational engagement between the mandrel and the coil, the mandrel being able to selectively rotate relative to the body.

### BRIEF DESCRIPTION OF THE DRAWINGS

Other features and advantages of the invention will be apparent from the detailed description that follows, based on the appended drawings wherein:
- FIG. 1 is a perspective view of an embodiment of a coil according to an embodiment of the invention,
- FIGS. 2A-2C show cross-sectional views of cutting filaments according to various embodiments of the invention,
- FIGS. 3A and 3B are respectively a perspective view and a cross-sectional view of a ribbon made of two cutting wires according to an embodiment of the invention,
- FIGS. 4A and 4B are respectively a perspective view and a cross-sectional view of a ribbon made of two cutting wires according to another embodiment of the invention,
- FIGS. 5A and 5B are respectively a perspective view and a cross-sectional view of a ribbon made of two cutting wires according to another embodiment of the invention,
- FIGS. 6A and 6B are respectively a perspective view and a cross-sectional view of a ribbon made of two cutting wires according to an embodiment of the invention,
- FIGS. 7A and 7B are cross-section views of two adjacent turns respectively before and after fusion of the lip,
- FIG. 8 is a cross-sectional view of a ribbon made of two cutting wires having a circular cross section according to an embodiment of the invention;
- FIG. 9 is a perspective view of an embodiment of a cutting head configured to receive the coil of FIG. 1A or 1B.

### DETAILED DESCRIPTION OF EMBODIMENTS OF THE INVENTION

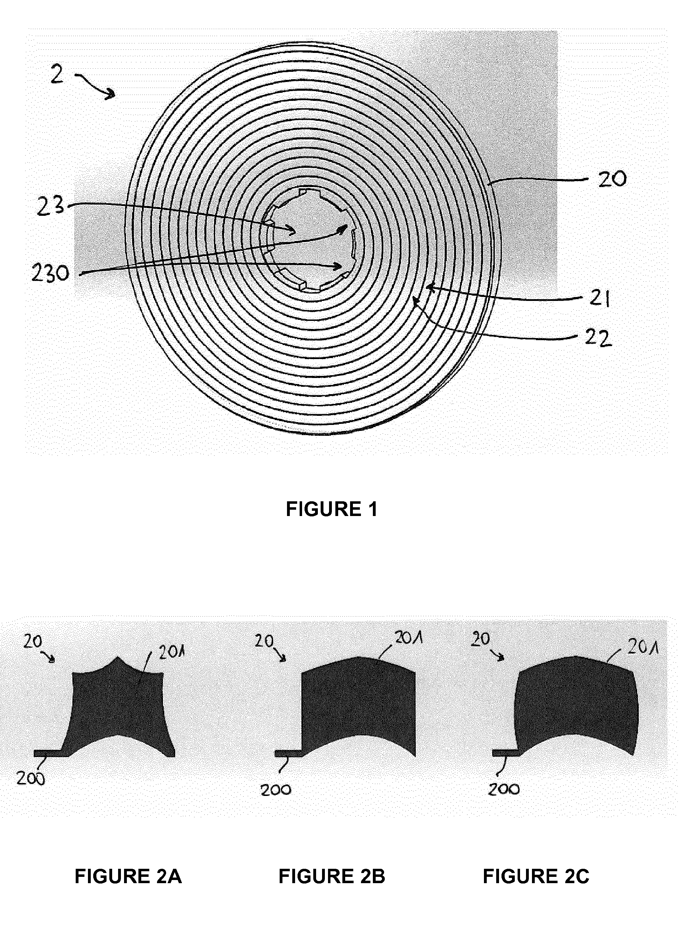

FIG. 1 illustrates a self-supporting coil 2 according to an embodiment of the invention. The self-supporting coil is made by winding on itself a cutting wire 20 so as to form at least two adjacent turns 21, 22 around a central void 23. A first end of the cutting wire 20 is located within the central void 23 of the coil, while the second end is a free end intended to emerge from the cutting head.

The coil 20 is advantageously flat, with a disc shape.

The turns are temporarily bonded to each other by fusing at least one lip (better seen in FIGS. 2A-7B) provided on the cutting wire. Since said lip is integral with the cutting wire, the film formed by the fusion of the lip is made of the same material as the cutting wire. Thus, the chemical composition of the cutting wire is not affected by the formation of the film. In addition, the film does not alter the shape of the cutting wire, which thus keeps its functionality (in particular, its cutting properties).

The fusion step may be carried out by any suitable technique, including ultrasonic welding, friction welding, hot plate welding, and/or high frequency welding.

In FIG. 1, the junctions between the turns are represented by solid lines to better visualize the cutting wire; however, the junction between adjacent turns may in fact be at least partially hidden by the material of the fused lip that is evenly distributed over the main surface of the coil.

According to an embodiment, the lip extends from one main surface of the coil. In such case, the turns are bonded only on one side of the coil.

According to an embodiment, a lip extends from both main surfaces of the coil. In such case, the turns are bonded on both sides of the coil. In such case, the lips extending on both faces of the coil are preferably fused at the same time, using the same technology.

By "temporarily bonded" is meant that the bonding strength of the turns is sufficient to have a self-supporting coil, but that the turns can be separated without damaging the wire under the effect of a pulling force exerted on the free end of the wire in view of reeling off a given length of the wire.

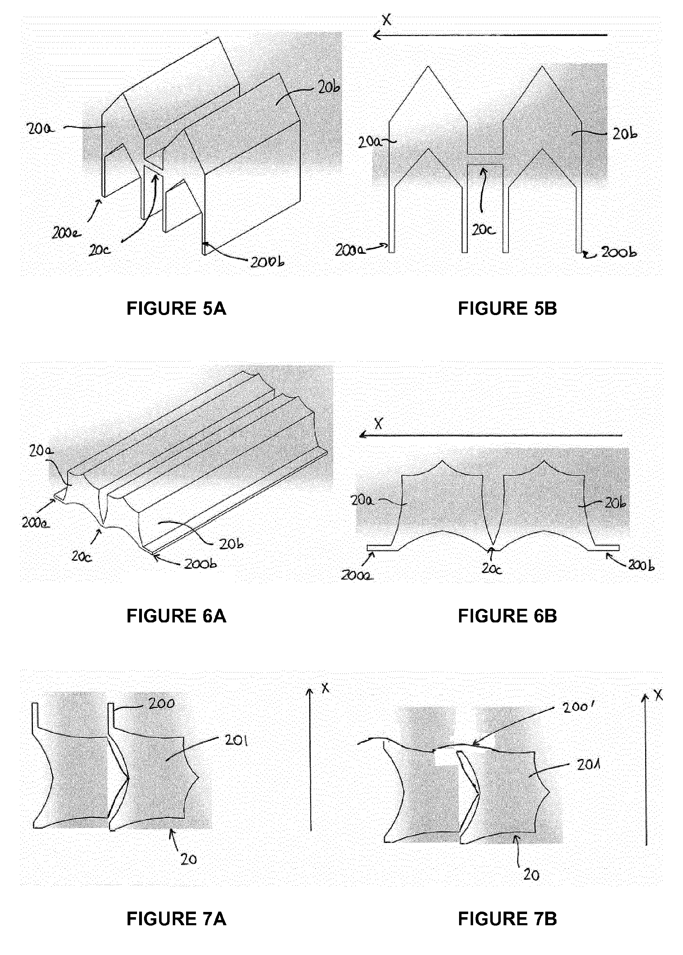

As shown in FIGS. 7A and 7B, the cutting wire 20 comprises a main body 201 that may have any shape suitable for cutting vegetation.

According to an embodiment, the cross section of the main body 201 is non-circular, since a circular shape may provide smaller contact areas between adjacent turns. The main body may have a substantially polygonal shape. By "substantially polygonal" is meant that the sides of the main body can be either flat or curved (e.g. with an arcuate concavity or convexity). The radius of curvature may typically range from 0 to 40 mm.

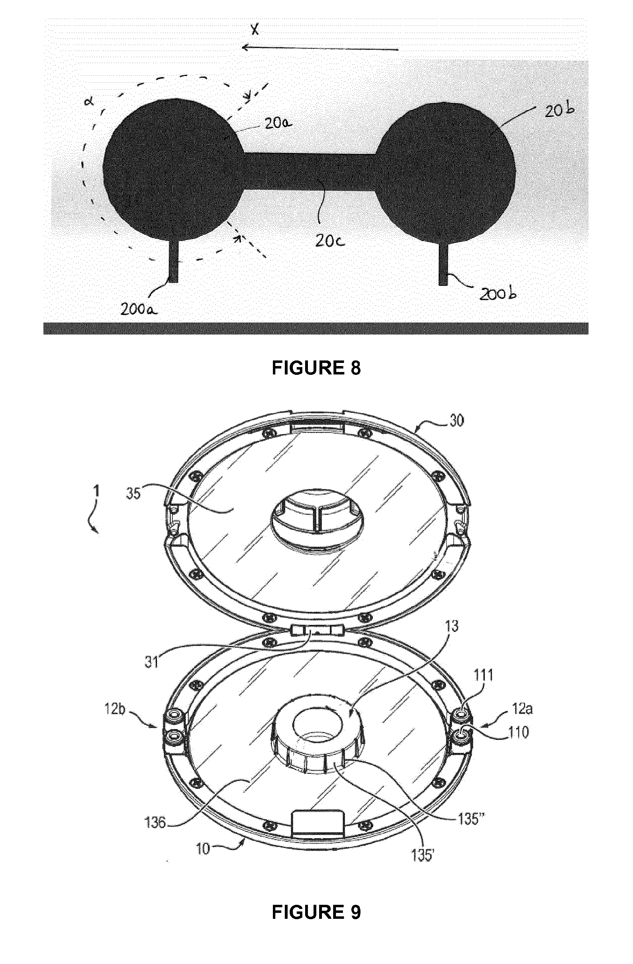

In another embodiment, however, the main body may have a circular cross section (see FIG. 8).

FIGS. 2A-2C show some examples of such cutting wires seen in cross-section.

According to an embodiment, the main body comprises first and second opposite sides having complementary shapes such that when the cutting wire is wound on itself, the first side engages the second side to join adjacent turns. This mechanical cooperation can provide a weak bonding force that is sufficient to maintain the turns in contact with each other until the lip is fused.

The cutting wire 20 further comprises at least one lip 200 that extends from the main body 201. Preferably, the lip extends continuously along the longitudinal direction of the cutting wire, which ensures uniformity of the distribution of the fused material. Alternatively, the lip can be discontinuous along the longitudinal direction of the cutting wire. The lip is of substantially smaller dimensions than the main body. In the appended drawings, the lip is a rib protruding from the main body and having a substantially rectangular cross section, but the lip could have any other cross section without departing from the scope of the present invention.

FIG. 6A shows a situation wherein two adjacent turns of the cutting wire 20 have been formed, but the lip 200 has not been fused yet.

FIG. 6B shows the turns of FIG. 6A after fusion of the lip 200. In this situation, the material 200' of the lip has been evenly distributed over the junction between adjacent turns, thereby forming a film adhering to the cutting wire and providing a temporary bonding of these turns.

The volume of the lip is chosen so that, when the lip is fused and the material thereof binds adjacent turns of the coil, the force to be exerted to unwind the cutting wire is within a selected range. In particular, the volume of the lip is chosen such that the bonding force between adjacent turns is sufficiently high to provide the self-supporting function, while being sufficiently low to allow unwinding either by a user's hand or automatically (in the case of a cutting head having a tap-and-go system). The skilled person is capable of determining suitable shape and size of each lip to obtain this effect.

The length of the lip (i.e. the distance between the free end of the lip and the connection of the lip with the body of the filament) may be comprised between 0.05 mm and 2 mm. The thickness of the lip may be comprised between 0.05 mm and 1 mm.

In general, when the cutting wire is seen in cross section, the area of the lip ranges from 0.1 to 5% of the total area of the cutting wire.

The substantially uniform distribution of the material of the fused lip is also advantageous in that it renders the corresponding main surface of the coil substantially airtight. As a result, the coil can then be handled using vacuum means, e.g. by a suction cup.

In other embodiments, the lip may not been fused uniformly over the main surface of the coil, but only in specific regions. For example, the lip could be fused only in regions in the form of strips extending radially.

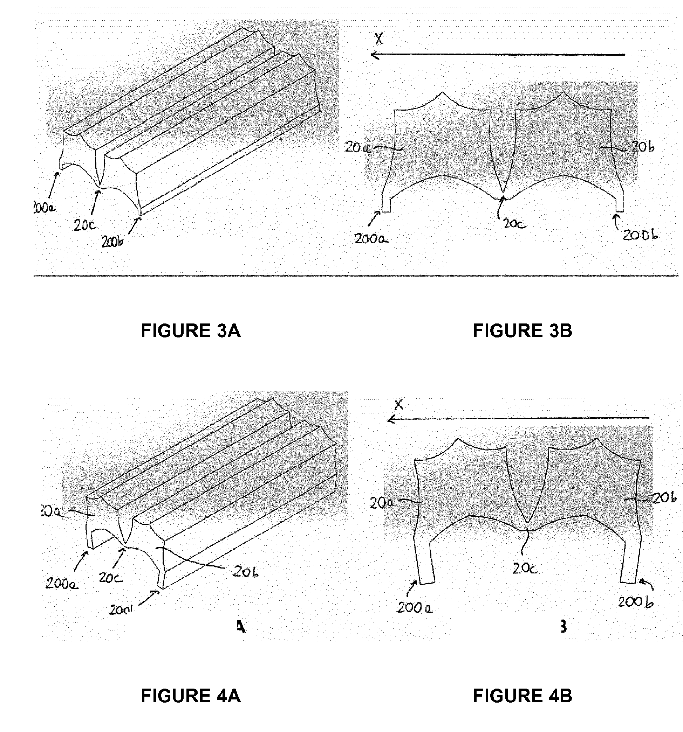

Advantageously, the coil may consist of a plurality of temporarily bonded turns of at least two cutting wires 20a, 20b bonded longitudinally in a separable manner (see FIGS. 3A-6B and 8). In such case, the wires are provided in the form a ribbon wherein the wires are longitudinally bonded in separable fashion, as described for example in document EP 0 435 795. The axis X is parallel to the axis of rotation of the cutting head, which is also the winding axis of the coil.

The connection between the two wires 20a, 20b, for example, is obtained by extrusion of a film 20c of the same material as the wires during manufacture of said ribbon. Said film 20c is thin enough to be torn for the purpose of separating the wires 20a, 20b over a certain length. For example, the thickness of the film 20c can be comprised between 0.1 and 5 mm, while its length (in the longitudinal direction of the wires) can be comprised between 0.1 and 5 mm.

The ribbon is then being wound on itself to form the turns and maintained by a suitable support (e.g. a casing comprising two plates configured to exert a pressure onto the two main surfaces of the coil in order to avoid any unwinding of the cutting wire) until fusion of the lip is carried out so as to bond the turns together.

Such coil thus has two temporary connections: one between the two wires 20a, 20b over their length; the other between adjacent turns, provided by the material of the fused lip.

Alternatively, the coil may of course consist of a single cutting wire or of more than two cutting wires bonded longitudinally in a separable manner.

FIGS. 3A-6B and 8 illustrate various but non limitative embodiments of the ribbon. In some cases (see FIGS. 3A-5B), the lip 200a, 200b can be substantially parallel to the main surface of the coil (i.e. substantially perpendicular to the winding axis X). In other cases (see FIGS. 6A-6B), the lip 200a, 200b can extend in a direction different from the main surface of the coil, e.g. in a direction substantially parallel to the winding axis X. The lip may also extend in any direction comprised between the above-described orientations. Preferably, as shown in FIG. 8, the lip may extend in any direction comprised within the angular sector α = 280°. Although the filaments in FIG. 8 have a circular cross section, this orientation of the lip is applicable to filaments with any other cross section.

Typically, when the ribbon is seen in cross section, the total area of the lips 200a, 200b and the film 20c ranges from 0.1 to 5% of the total area of the ribbon.

The cutting wire is made by extrusion of a thermoplastic material through a die defining the shape of the main body and lip of each cutting wire.

The thermoplastic material typically comprises a polyamide and/or a copolyamide and may include any suitable additive, e.g. a softener, a dye, a compatibilisation agent, etc.

The cutting wire may be made by coextrusion of two or more different thermoplastic materials, e.g. a first material forming a core of the cutting wire and a second material forming a sheath surrounding at least partially the core.

The cross section of the wire has an area equal to the cross-section of a round wire having a diameter comprised between 1.35 and 4 mm, preferably between 1.35 and 2 mm.

Once the cutting wire has been wound to form the self-supporting coil as shown in FIG. 1A or 1B and the at least one lip has been fused, the innermost turn may be at least partially welded to the directly adjacent turn.

Such a welding may be made by applying heat - and also preferably a radial outwards force - onto the innermost turn and the adjacent turn so as to provoke melting of the thermoplastic material.

Preferably, the innermost turn is welded to the directly adjacent turn over an angular sector of 360°. However, a smaller angular sector may be accepted, e.g. an angular sector of 90° or 180°.

During this operation, the first end 220 of the cutting wire may also be pressed onto the adjacent turn and adopt a flattened shape.

Possibly, more than the two above-mentioned turns may be welded. For example, the turn directly adjacent to the innermost turn may also be welded, on its outer side, to the directly adjacent turn.

As compared to the temporary bonding of the turns provided by the fusion of the lip(s), the above-mentioned welding can be considered as a permanent bonding of the innermost turn and the directly adjacent turn, meaning that these turns are not intended to be separated.

The welding has the effect of blocking both turns relative to each other, which thus prevents any relative sliding of these turns. As a consequence, even if such a sliding occurs with the turns that are only temporarily bonded by the reciprocal retention arrangements, adhesive or other appropriate means, it does not propagate to the innermost turn and thus does not lead to a tightening up of the coil around the mandrel.

Thus, even after significant use, the coil can still be removed easily from the mandrel.

According to an embodiment, the welding step can also comprise shaping the surface of the innermost turn facing the central void 23 so as to form a plurality of grooves 230 therein (see FIG. 1A or 1B). In this way, the shape of the central void can be adjusted to the external shape of the mandrel. The grooves 230 create a succession of protrusions and recess that extend parallel to the axis of rotation of the mandrel. For example, in the case of a cutting head having a mandrel comprising a plurality of ribs (see FIG. 9), the same number of grooves can be created in the innermost turn so as to cooperate with the ribs and thus improve the rotational engagement between the mandrel and the coil.

FIG. 9 illustrates an overview of an open cutting head that may be used in combination with the coil according to the invention.

The coil (not shown) is set in a recess provided in a body 10 of the cutting head 1. A cover 30 intended to be secured to the body 10 closes the recess. In the embodiment illustrated in FIG. 7, the body and cover are linked by a hinge 31 and further secured by screws (not shown) but this is not intended to be limitative. For example, the cover and body could be secured only by screws.

The body 10 includes at least one opening 12a, 12b which opens into the recess in order to allow the emergence of a length of cutting wire separated from the coil. The openings 12a, 12b are preferably evenly distributed circumferentially; for example, if the openings are two in number, they are advantageously diametrically opposite. Naturally, if more wires are to be used in the cutting head, a sufficient number of openings will be provided.

Moreover, all the openings are not necessarily arranged on the body 10 as illustrated in FIG. 9; the openings can in fact be distributed both on the cover 30 and on the body 10, for example.

According to an embodiment, the inner and outer walls of the recess exhibit, on either side of the opening, a rounded end 110, 111 serving as an abutment surface for the wire during rotation of the cutting head, which limits the risk of breakage at the eyelet, that is breakage of the wire at the opening 12.

The coil is accommodated in the recess on a central mandrel 13 comprising, on its outer surface 135', a plurality of ribs 135". The innermost turn of the coil being forcibly engaged onto the ribs 135", the mandrel 13 and the coil are thereby in rotational engagement.

The mandrel 13 is positioned so as to turn selectively relative to the body 10. What is meant by selectively is that in normal operation of the cutting head, that is when it is driven in rotation by the motor of the cutting machine for the purpose of cutting vegetation, the mandrel 13 is fixed with respect to the body 10, and that it is caused to turn with respect to the body 10 only by an action from a user.

According to an embodiment, the mandrel 13 comprises a supporting plate 136 that extends radially from the peripheral surface 135 and that supports the coil 2. Because of the strain generated during use of the cutting head, the mandrel and the supporting plate are advantageously made of metal. Preferably, the supporting plate is not smooth but instead has a surface having a certain roughness that prevents the coil from sliding. For example, said surface may consist in an increased roughness of the supporting plate 136, or barbs regularly distributed on the surface. In an alternative or complementary way, the supporting plate may be pierced with a plurality of circular holes, distributed according to one or several concentric circles around the axis of rotation of the mandrel 13. Indeed, when the supporting plate 136 is being pierced, the metal that is pushed aside forms around each hole barbs that extend beyond the surface of the plate 136 and that exert a retaining function of the coil. The supporting plate 136 may thus be pierced with a first series of holes distributed along a first circle close to the mandrel 13, and a second series of holes distributed along a second circle close to the periphery of the plate 136.

According to an advantageous embodiment, the cutting head may further comprise a pressuring plate 35 arranged in the cover 30 against a spring (not shown), opposite to the supporting plate 136. Said pressuring plate 35 is intended to be in contact with the coil and, due to the force of the spring, exert a pressure onto the coil when it is in working position within the head. This allows maintaining the coil in a flat position between the supporting plate 136 and the pressuring plate 35, which in turn promotes a better rotational engagement of the coil and the mandrel.

### REFERENCES

FR 2 967 548
US 4,024,635
WO 2014/020178
EP 0 435 795

## Claims

1. Cutting wire (20) for a vegetation cutting machine, comprising a main body (201) and at least one lip (200) extending from said main body.

2. Cutting wire according to claim 1, wherein the main body has a non-circular shape.

3. Cutting wire according to claim 1 or claim 2, wherein the main body comprises first and second opposite sides having complementary shapes such that when the cutting wire is wound on itself, the first side engages the second side to join adjacent turns.

4. Cutting wire according to one of claims 1 to 3, made of a material comprising a polyamide and/or a copolyamide.

5. Cutting wire according to one of claims 1 to 4, wherein the cross section of the main body has an area equal to the cross-section of a round wire having a diameter comprised between 1.35 and 4 mm.

6. Cutting wire according to one of claims 1 to 5, wherein the area of the cross section of the lip ranges from 0.1 to 5% of the area of the cross section of the cutting wire.

7. Ribbon comprising at least two cutting wires (20a, 20b) according to one of claims 1 to 6 bonded longitudinally in a separable manner.

8. Ribbon according to claim 7, wherein the at least two cutting wires are joined to each other by at least one tearable section (20c) thinner than the main body.

9. Coil (2) of cutting wire for a vegetation cutting machine, comprising at least one cutting wire would on itself so as to form at least two adjacent turns (21, 22), wherein said at least two adjacent turns are temporarily bonded by a film extending on at least one main surface of the coil and made of the same material as the cutting wire.

10. Coil (2) according to claim 9, comprising a cutting wire (20) according to one of claims 1 to 6 or a ribbon according to one of claims 7 or 8, wherein each cutting wire is wound on itself so as to form at least two adjacent turns (21, 22) and the lip (200) is fused to form the film that temporarily bonds said adjacent turns.

11. Coil according to one of claims 9 to 10, wherein the coil has a flat shape.

12. Process for producing a coil of cutting wire according to one of claims 9 to 11, comprising:
- providing a cutting wire (20) according to one of claims 1 to 6 or a ribbon according to one of claims 7 to 8;
- winding each cutting wire on itself so as to form a coil;
- fusing the at least one lip (200) of the cutting wire so as to form a film temporarily bonding adjacent turns of the coil.

13. Process according to claim 12, wherein the provision of the cutting wire comprises extruding the cutting wire though a die presenting a cross section defining the main body and the at least one lip.

14. Process according to one of claims 12 to 13, wherein the winding step is carried out so as to form a flat coil.

15. Process according to claim 14, wherein the at least one lip extends in a direction different from a main surface of the coil.

16. Process according to one of claims 12 to 15, wherein the cutting wire comprises at least two lips extending on both sides of the coil.

17. Process according to one of claims 12 to 16, wherein the fusion step is carried out by ultrasonic welding, friction welding, hot plate welding, and/or high frequency welding.

18. Cutting assembly for a vegetation cutting machine such as a border trimmer or a brush cutter, said assembly including at least one coil according to one of claims 9 to 11 and a cutting head (1) comprising:
- a body (10) defining an inner recess for the coil (2) and provided with a peripheral opening (12a, 12b) for the emergence of a length of cutting wire separated from the coil, and capable of being driven in rotation by a motor, and
- a central mandrel (13) for supporting said at least one coil (2), said mandrel comprising at least one arrangement (135") adapted to cooperate with the coil (2) so as to ensure rotational engagement between the mandrel and the coil, the mandrel (13) being able to selectively rotate relative to the body (10).
